## Europäisches Patentamt
## European Patent Office
## Office européen des brevets

(19)

(11) Numéro de publication: **0 004 693**
**B1**

(12) **FASCICULE DE BREVET EUROPEEN**

(45) Date de publication du fascicule du brevet: **28.07.82**

(51) Int. Cl.³: **G 01 N 33/20,** C 21 C 5/30, G 01 N 27/56

(21) Numéro de dépôt: **79200163.8**

(22) Date de dépôt: **04.04.79**

(54) Dispositif de mesure de la teneur en oxygène actif de bains de métaux en fusion.

(30) Priorité: **06.04.78 FR 7810229**

(43) Date de publication de la demande:
**17.10.79 Bulletin 79/21**

(45) Mention de la délivrance du brevet:
**28.07.82 Bulletin 82/30**

(84) Etats contractants désignés:
**BE CH GB IT LU NL SE**

(56) Documents cités:
**FR - A - 2 035 626**
**FR - A - 2 131 286**
**FR - A - 2 305 733**
**US - A - 3 791 954**

(73) Titulaire: **ELECTRO-NITE N.V.**
**Grote Baan 27a**
**B-3530 Houthalen (BE)**

(72) Inventeur: **Cure, Omer Paul Ivo**
**Havenlaan 8**
**B-3610 Diepenbeek (BE)**

(74) Mandataire: **Bockstael, Marius Florimond Jean et al,**
**Arenbergstraat 13**
**B-2000 Anvers (BE)**

Courier Press, Leamington Spa, England.

Dispositif de mesure de la teneur en oxygène actif de bains de métaux en fusion.

La présente invention concerne un dispositif de mesure de la teneur en oxygène actif de bains de métaux en fusion, tels que les fontes, le fer et les aciers.

Depuis plusieurs années, on connaît de tels dispositifs à usage unique, constitués par une tête de mesure réalisant une cellule électrochimique, destinée à mesurer la différence du potentiel en oxygène actif entre le bain de métal en fusion et une référence. Ces têtes de mesure connues sont généralement montées en bout d'un tube porteur et sont principalement constituées par une pièce en céramique sur laquelle fait saillie un tube en oxyde de zirconium contenant une référence et une extrémité d'un conducteur, ladite pièce portant également un autre conducteur métallique destiné à faire contact avec le métal en fusion. La tête est plongée dans le bain à mesurer et y est immergée le temps nécessaire à l'enregistrement de la mesure, temps de l'ordre de 15 secondes environ.

Au cours de nombreuses expériences pratiques avec ces dispositifs connus, la Demanderesse a trouvé que les mesures étaient souvent aléatoires étant donné qu'on ne pouvait les obtenir avec suffisamment de fiabilité. Suite à d'autres recherches, la Demanderesse a trouvé que ce caractère aléatoire était dû à des défaillances résultant du choc thermique lors de l'introduction de la tête de mesure dans le bain de métal en fusion.

Il faut remarquer que ce problème du choc thermique avait déjà été reconnu (voir brevets français FR—A—2.035.626 et FR—A—2.131.286 ainsi que le brevet américain US—A—3.791.954). Les solutions antérieurement proposées consistaient à prévoir une protection de la cellule à l'aide d'un mauvais conducteur thermique tel que l'air (brevets français cités ci-avant) ou le papier, du tissu, une résine synthétique ou du cuir (brevet américain cité). Ces solutions ne sont guère satisfaisantes, car le réchauffement de la cellule est d'abord lent, puis brutal dès la disparition de la protection.

La Demanderesse a découvert que, contrairement à l'état de la technique susmentionné, il fallait utiliser un écran protecteur bon conducteur de la chaleur, donc métallique, et le disposer en contact direct avec l'oxyde de zirconium. En outre, cet écran doit être réalisé de sorte à disparaître après un temps d'immersion dans le bain compris entre 0,3 et 5 secondes. Le choix du métal et l'épaisseur de l'écran seront fonction principalement des gammes de température des bains considérés et des caractéristiques de la cellule utilisée.

L'application d'un écran protecteur métallique présente un double avantage, à savoir:

a. — il protège la cellule électrochimique du susdit choc thermique lors de l'introduction de tête de mesure dans le bain de métal en fusion, et

b. — il peut simultanément avoir la fonction d'électrode destinée à faire contact avec le métal en fusion.

Pour plus de clarté, trois exemples de mise en oeuvre de l'invention sont décrits ci-après à titre purement illustratif et non restrictif, référence étant faite aux dessins annexés, dans lesquels:

la figure 1 représente, en vue explosée, un premier exemple de réalisation de l'invention;

la figure 2 représente la tête de mesure selon la figure 1, à l'état assemblé;

la figure 3 est une coupe axiale de la tête de mesure représentée à la figure 2;

la figure 4 représente un deuxième exemple de réalisation de l'invention, en coupe axiale; et

la figure 5 est une variante du premier exemple de réalisation, variante dans laquelle l'écran protecteur fonctionne également comme électrode de contact.

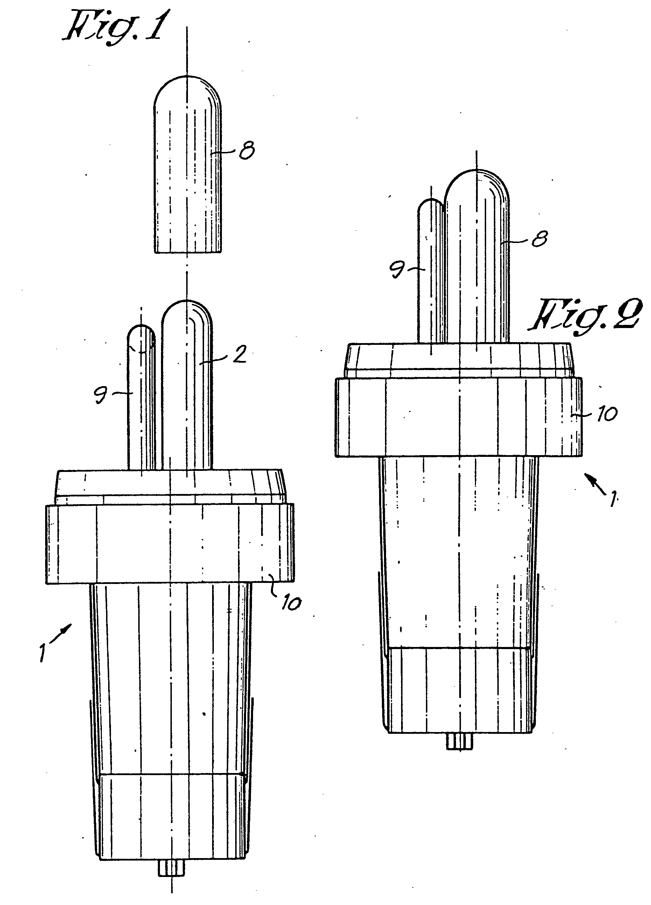

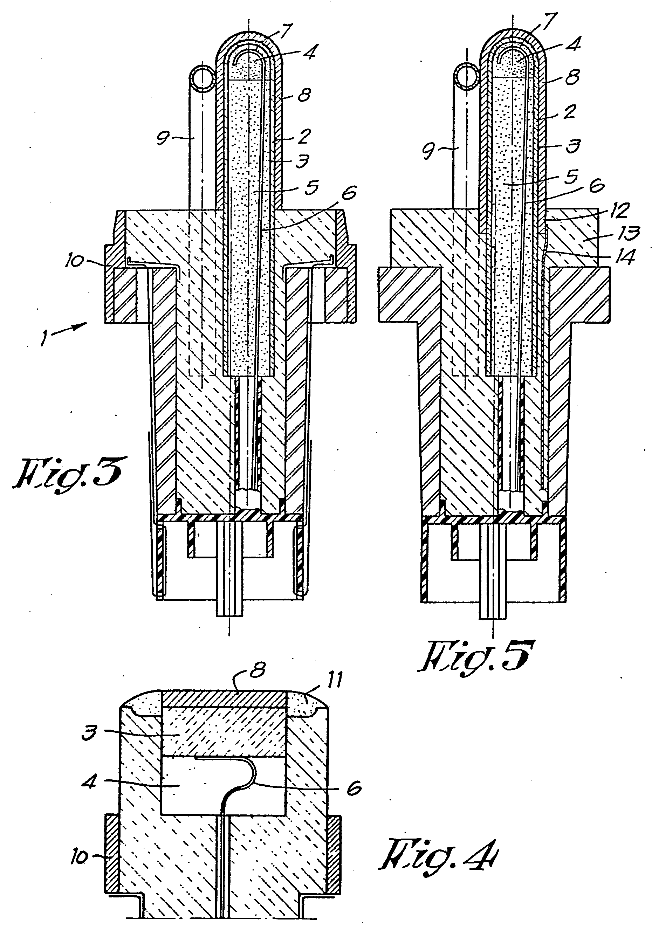

Le dispositif représenté dans les figures 1 à 3 est constitué par une tête de mesure 1 destinée à être montée en bout d'un tube porteur en carton, bois ou similaire non représenté. Cette tête de mesure 1 est d'un type connu, par exemple tel que décrit dans le brevet français FR—A—2 305 733 de la Demanderesse. En l'occurrence, la cellule électrochimique 2 est composée d'un tube en oxyde de zirconium 3 enveloppant dans sa partie supérieure une référence 4 (Cr/Cr$_2$O$_3$ et renfermant dans sa partie inférieure une matière de remplissage inerte 5. Un conducteur 6, dont l'extrémité 7 se noie dans la référence 4, est prévu à l'interieur du tube 3. Un écran en forme de fourreau métallique tubulaire 8 à une extrémité fermée, fourreau dont le diamètre intérieur est substantiellement égal au diamètre externe de ladite cellule 2, est glissé à frottement doux sur cette dernière.

L'épaisseur de la paroi du fourreau métallique 8 est choisie en fonction principalement des gammes de températures des bains de métal en fusion et des caractéristiques de la cellule utilisée. Le fourreau tubulaire 8 a pour effet d'amortir considérablement le choc thermique provoqué lors de l'immersion de la tête de mesure dans le bain de métal en fusion et, partant, de réduire considérablement les risques de défaillances. Il a été établi que cet effet était atteint lorsque ledit écran ou fourreau protégeait réellement la cellule de tout contact thermique direct avec le métal du bain pendant un temps d'environ 0,3 à environ 5 secondes à partir du début de l'immersion. Il est important, selon l'invention, que le tube 3 en oxyde de zirconium soit ensuite en contact direct avec le bain, pour obtenir une mesure exacte dans un temps acceptable.

Tout comme dans le brever français FR—A—2 305 733 susmentionné, la tête de mesure 1 peut également porter un autre dispositif de mesure, par exemple un thermocouple 9.

Afin de permettre la mesure de la différence du potentiel en oxygène actif entre le bain de métal en fusion et la référence, la tête de mesure peut par exemple être localement entourée par un contact métallique 10 relié à l'extrémité d'un autre conducteur au moins.

Selon l'invention, on peut également utiliser le fourreau métallique 8 en tant qu'électrode de contact. Ainsi, comme représenté à la figure 5, le fourreau métallique 8 se voit prolongé à sa base par un bout annulaire 12 pénétrant dans la masse céramique 13. La prolongation 12 du fourreau métallique 8 est à son tour reliée à un conducteur 14. Il est bien évident qu'en l'occurrence l'anneau métallique 12 remplace le contact métallique 10 de la figure 3. Ceci permet de réduire considérablement le prix de revient du dispositif de mesure étant donné qu'une quantité considérablement inférieure de métal est nécessaire pour garantir le contact avec le bain de métal en fusion.

Il est à noter que la partie 8 du fourreau métallique se consomme lors de l'immersion du dispositif dans le bain de métal en fusion, tandis que la partie 12 du fourreau est protégée par la masse céramique 13 de façon à permettre la mesure de la différence du potentiel en oxygène actif entre le bain de métal en fusion et la référence.

Dans la figure 4 est représentée une variante du dispositif selon l'invention. Cette réalisation est également constituée par une tête de mesure 1 proprement dite, comportant une cellule électrochimique composée d'un corps cylindrique 3 en oxyde de zirconium, une référence 4 (Cr/Cr$_2$O$_3$) et un conducteur 6 dont l'extrémité se noie dans ladite référence 4.

En l'occurrence, l'écran protecteur 8 est réalisé en forme de disque métallique dont le diamètre est substantiellement égal au diamètre du corps cylindrique 3.

L'écran protecteur 8 est fixé en bout de la tête de mesure 1 par un ciment réfractaire 11 de composition bien connue.

Un contact métallique 10, entourant localement la tête de mesure 1, est relié à l'extrémité d'un autre conducteur au moins afin de permettre la mesure de la teneur en oxygène actif.

Il est bien évident que diverses modifications peuvent être apportées aux exemples susdécrits, sans pour autant sortir du cadre de l'invention.

**Revendications**

1. Dispositif de mesure de la teneur en oxygène actif de bains de fontes, fer ou aciers en fusion, du type constitué par une tête de mesure montée en bout d'un tube porteur, cette tête comportant une pièce céramique portant une cellule électochimique composée d'oxyde de zirconium et d'une référence, l'oxyde de zirconium étant thermiquement protégé par un écran en un métal soluble ou fusible aux températures des bains envisagés, caractérisé en ce que ledit écran est en contact avec la partie de l'oxyde de zirconium à protéger et en ce qu'il est réalisé de sorte à disparaître après un temps d'immersion dans ledit bain compris entre 0,3 et 5 secondes.

2. Dispositif selon la revendication 1, dans lequel ledit oxyde de zirconium se présente sous la forme d'un tube en saillie sur ladite pièce céramique et contenant ladite référence, caractérisé en ce que ledit écran protecteur (8) a une forme tubulaire dont le diamètre intérieur est substantiellement égal au diamètre extérieur de ladite cellule électrochimique (2) et dont la longueur est au moins égale à celle de la partie en saillie de ladite cellule (2).

3. Dispositif selon la revendication 1, dans lequel ledit oxyde de zirconium se présente sous la forme d'une masse cylindrique superposée à et en contact avec ladite référence, caractérisé en ce que ledit écran protecteur (8) est réalisé en forme de disque appliqué contre la face extérieure de ladite masse cylindrique (3), ledit disque (8) étant fixé à ladite tête de mesure (1) par tout moyen adéquat (11).

4. Dispositif selon la revendication 2, caractérisé en ce qu'une partie (12) au moins dudit écran métallique (8) est noyée dans ladite pièce céramique (13), ladite partie étant raccordée à un conducteur (14).

**Patentansprüche**

1. Vorrichtung zur Messung der Aktivsauerstoffkonzentration in Metallschmelzen, wie z.B. Gusseisen-, Eisen- und Stahlschmelzen, der aus einem am Ende eines Tragrohres befestigten Messkopf (1) bestehenden Art, wobei dieser Messkopf (1) aus einer Keramikmasse (13) mit einer aus Zirkonoxyd (3) und einer Bezugsmasse (4) bestehenden elektrochemischen Zelle (2) besteht und das Zirkonoxyd (3) durch einen im betreffenden Schmeltztemperaturenbereich löslichen bzw. schmelzbaren Metallschirm (8) geschützt wird, dadurch gekennzeichnet, dass dieser Schirm (8) sich in Berührung mit dem zu schützenden Teil des Zirkonoxyds (3) befindet und derart ausgeführt ist, dass er innerhalb 0,3—5 Sekunden nach dem Eintauchen in die Schmelze verschwindet.

2. Vorrichtung gemäss dem Anspruch 1, wobei das Zirkonoxyd (3) die Form eines aus der vorgenannten Keramikmasse herausragenden und die vorgenannte Bezugsmasse (4) enthaltenden Rohres hat, dadurch gekennzeichnet, dass der vorgenannte Schirm (8) ein rohrförmiger Körper ist, dessen Innendurchmesser praktisch dem Aussendurchmesser der vorgenannten elektrochemischen Zelle (2) und dessen Länge wenigstens der des vorgenannten herausragenden Teiles der elektrochemischen Zelle (2) entspricht.

3. Vorrichtung gemäss dem Anspruch 1, wobei das Zirkonoxyd (3) ein zylinderförmiger, auf der Bezugsmasse (4) angeordneter und sich mit ihr in Berührung befindlicher Körper ist, dadurch gekennzeichnet, dass der vorgenannte Schirm (8) ein auf der Aussenseite des vorgenannten zylinderförmigen Körpers (3) liegender, am vorgenannten Messkopf (1) mit einem beliebigen geeigneten Mittel (11) befestigter scheibenförmiger Körper ist.

4. Vorrichtung gemäss dem Anspruch 2, dadurch gekennzeichnet, dass wenigstens ein Teil (12) des vorgenannten Metallschirmes (8) in die vorgenannte Keramikmasse (13) versenkt und an einen Leiter (14) angeschlossen ist.

## Claims

1. Device for measuring the concentration of active oxygen in molten metals as in baths of molten cast iron, iron or steel, of the type constituted by a measuring head mounted at the end of a carrying tube, this head comprising a part made of ceramics carrying an electrochemical cell composed of zirconium oxide and a reference mass, the zirconium oxide being protected as far as the thermal aspect is concerned by a screen made of a metal which is soluble or fusible at the temperatures of the baths under consideration, characterized in that the aforesaid screen is in contact with the part of zirconium oxide to be protected and that it is made so as to disappear after a time of immersion in the bath ranging from 0,3 to 5 seconds.

2. Device according to claim 1, in which the aforesaid zirconium oxide presents itself in the shape of a tube projecting from the aforesaid part made of ceramics and containing the aforesaid reference mass, characterized in that the aforesaid protecting screen (8) has a tubular shape the inner diameter of which is substantially equal to the outer diameter of the aforesaid electro-chemical cell (2) and the length of which is at least equal to the length of the projecting part of the aforesaid cell (2).

3. Device according to claim 1, in which the aforesaid zirconium oxide presents itself in the shape of a cylindrical mass superposed on and in contact with the aforesaid reference mass, characterized in that the aforesaid protecting screen (8) is made so as to have the shape of a disk mounted on the outer face of the aforesaid cylindrical mass (3), the aforesaid disk (8) being fixed on the aforesaid measuring head (1) through any appropriate means (11).

4. Device according to claim 2, characterized in that at least a part of the aforesaid metallic screen (8) is embedded in the aforesaid part made of ceramics (13), the aforesaid part of the metallic screen being connected with a conductor (14).

0 004 693

Fig.1

8

9

2

1

10

Fig.2

9

8

10

1

1

**Fig.3**

**Fig.5**

**Fig.4**

2